# EUROPEAN PATENT APPLICATION

(11) **EP 2 269 842 A1**
(43) Date of publication of application: **05.01.2011**
(21) Application number: 09008566.3
(22) Date of filing: 30.06.2009
(51) Int. Cl.: B60C 27/04

(54) **Anti-skid system**

(71) Applicant: Mazzamurro, Giovanni, 20090 Buccinasco (IT)
(72) Inventor: Mazzamurro, Giovanni, 20090 Buccinasco (IT)
(74) Representative: Grünecker, Kinkeldey, Stockmair & Schwanhäusser Anwaltssozietät

(57) **Abstract**

An anti-skid device formed by a plurality of anti-skid units (201,202,203,204,205) is described which is extremely easy to be installed and removed from the wheels of a vehicle and it guarantees a safe and complete traction control of the vehicle even on extremely slippery roads. Moreover, since the units are completely independent from each other, the replacement of one of the units in case of defects or damages is extremely easy and does not require the replacement of the entire device. Furthermore, the anti-skid device according to the present invention is adaptable to wheels exhibiting different dimensions.

## Description

### FIELD OF THE PRESENT INVENTION

The present invention relates to the field of anti-skid devices. In particular, the present invention relates to anti-skid devices for wheeled vehicles. Still more in particular, the present invention relates to anti-skid devices comprising a plurality of removable independent anti-skid units.

### STATE OF THE ART

Anti-skid devices are employed to improve the traction and the road holding capabilities of vehicles in critical situations such as in the presence of road surfaces covered with snow, ice, mixtures of water and ice, mud or the like. In these situations it is extremely dangerous, if not impossible, to drive a vehicle without anti-skid devices. For these reasons, there are several areas, especially in the mountains regions typically prone to sudden and copious snowfalls or to frost, whose traffic circulation is limited to vehicles carrying on board anti-skid devices ready to be used. Anti-skid devices are then usually carried in the trunks of the vehicles and they are mounted on the driving wheels of the vehicles whenever it is necessary. A typical example of anti-skid device widely employed all over the world is represented by the snow chains. This and other kinds of known anti-skid devices are characterized by a series of problems and drawbacks. One of the major problems connected with the traditional anti-skid devices known in the art is related to the difficulty of mounting the device on the wheels of the vehicles. The mounting operations necessary to safely and properly install the traditional anti-skid devices are usually complex and requires a certain degree of familiarity and experience. Moreover, these mounting operations are made more difficult by the fact that they have to be performed under adverse meteorological conditions, such as in the presence of very low external temperatures, during snow storms or in the dark if driving at night time. Accordingly, mounting the traditional anti-skid devices is extremely time consuming and may even require more than one person to be carried out. Similarly, it is also difficult to perform the removing operations of the known anti-skid devices from the wheels of the vehicles. Moreover, right after use, the anti-skid devices, are dirty and may be clogged by large pieces of mud, snow or ice. Accordingly, removing the anti-skid devices right after use may be a particularly annoying and unpleasant task. A further problem related to the known anti-skid devices relates to the fact that they ruin the road surface when it is not covered with snow, ice or mud. Accordingly, it might be necessary to mount and remove the known anti-skid devices several times while traveling along roads presenting varying surface conditions. In particular, it is compulsory to remove the anti-skid devices whenever the road surface is clean in order to avoid to damage it. For these reasons and considering the above-mentioned problems related to the mounting and removing operations of the known anti-skid devices, it is extremely difficult and time consuming to travel along roads presenting varying surface conditions.

A further problem concerning known anti-skid devices relates to the replacement of defect or worn components of said devices. Typically, this is extremely costly and, in several cases, when one of the components is defect, it is necessary to replace the entire device. A further problems concerning known anti-skid devices relates to the fact that typically said anti-skid devices are sized and structured so as to be only suitable for wheels having a certain diameter. Accordingly, said anti-skid devices are not usable on more than one kind of wheels and, therefore, it is not possible to use them for instance on a new vehicle replacing the old one and provided with different kinds of wheels or it is not possible to use them for instance on different vehicles belonging to the same person but provided with different kinds of wheels..

### OBJECT OF THE PRESENT INVENTION

In view of the mentioned problems concerning the known anti-skid devices, it is an object of the present invention to provide an anti-skid device allowing to overcome these problems. In particular, it is an object of the present invention to provide an anti-skid device which is extremely easy to mount on a wheel and dismount from it. It is a further object of the present invention to provide an anti-skid device that allows the wheels of a vehicle to be quickly and easily provided with gripping means. It is a further object of the present invention to provide an anti-skid device that allows to quickly and easily remove the gripping means. It is a further object of the present invention to provide an anti-skid device whose components are easily replaceable in case they are damaged or worn. It is a further object of the present invention to provide an anti-skid device adaptable to wheels exhibiting different dimensions, in particular to wheels exhibiting different diameters.

### BRIEF DESCRIPTION OF THE INVENTION

The present invention relates to an anti-skid device for a wheeled vehicle easily mountable and dismountable from the wheels of the vehicle.

The present invention allows having the wheels of the vehicle ready for being quickly provided with gripping means for anti-skid purposes for long periods of time, even for several months, without affecting at all the driving properties of the vehicle.

The present invention is based on the innovative concept of providing an anti-skid device comprising a support adapted to be engaged on the wheel of a vehicle and to be kept thereon for long periods of time without affecting the driving properties of the vehicle and a plurality of independent anti-skid units comprising gripping means and adapted to be quickly and easily installed on said support and to be quickly and easily removed therefrom.

According to a preferred embodiment of the present invention, the anti-skid device is provided with a support adapted to be engaged to the wheel of the vehicle by means of the bolts employed for engaging the wheel to the vehicle.

According to a further preferred embodiment of the present invention, the anti-skid device comprises a support provided with a plurality of blocks wherein each block is adapted to removably hold an anti-skid unit comprising gripping means.

According to a particularly advantageous embodiment of the present invention, the anti-skid device is provided with a plurality of independent anti-skid units, wherein each unit is adapted to hold a claw adapted to clasp the tire tread of a wheel.

According to a further preferred embodiment of the present invention, the anti-skid units are provided with sliding means for allowing the claw to be hold at different position so as to allow the device to be suitable for wheels with different diameters.

### BRIEF DESCRIPTION OF THE DRAWINGS

Figure 1A displays the anti-skid device according to a preferred embodiment of the present invention mounted on a wheel of a vehicle;
Figure 1B displays a wheel of a vehicle provided with a support for the anti-skid units according to a preferred embodiment of the present invention;
Figure 2 displays the fastening mechanism of the support shown in figure 1B to the wheel;
Figure 3A displays a 3D view of one of the blocks of the anti-skid device according to a preferred embodiment of the present invention;
Figure 3B displays a front view of the block shown in figure 3A;
Figure 4 displays the mounting mechanism of the anti-skid unit according to a preferred embodiment of the present invention on the block shown in figures 3A and 3B;
Figure 5 displays the anti-skid unit according to a preferred embodiment of the present invention;
Figure 6 displays the claw according to a preferred embodiment of the present invention;
Figure 7 displays the claw according to a further embodiment of the present invention;
Figure 8A displays a side view of a wheel of a vehicle provided with an anti-skid device according to a preferred embodiment of the present invention:
Figure 8B displays a front view of the wheel shown in figure 8A.

### DETAILED DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

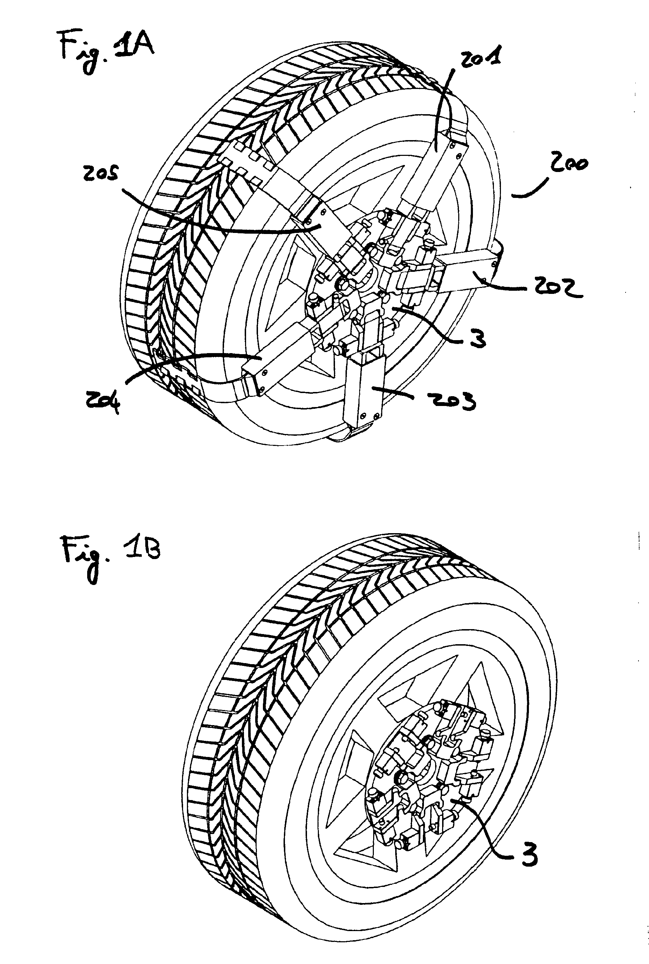

As can be seen in figure 1A, the device 200 is provided on the outer side of the wheel. The anti-skid device 200 comprises a plurality of anti-skid units. In particular, the anti-skid device 200 comprises five identical anti-skid units 201, 202, 203, 204 and 205. The anti-skid units 201, 202, 203, 204, 205 are removably provided on a support 3. Each of the unit is independent from the other units. The support 3 is adapted to be fixed to the wheel as can be seen for instance in figure 1B.

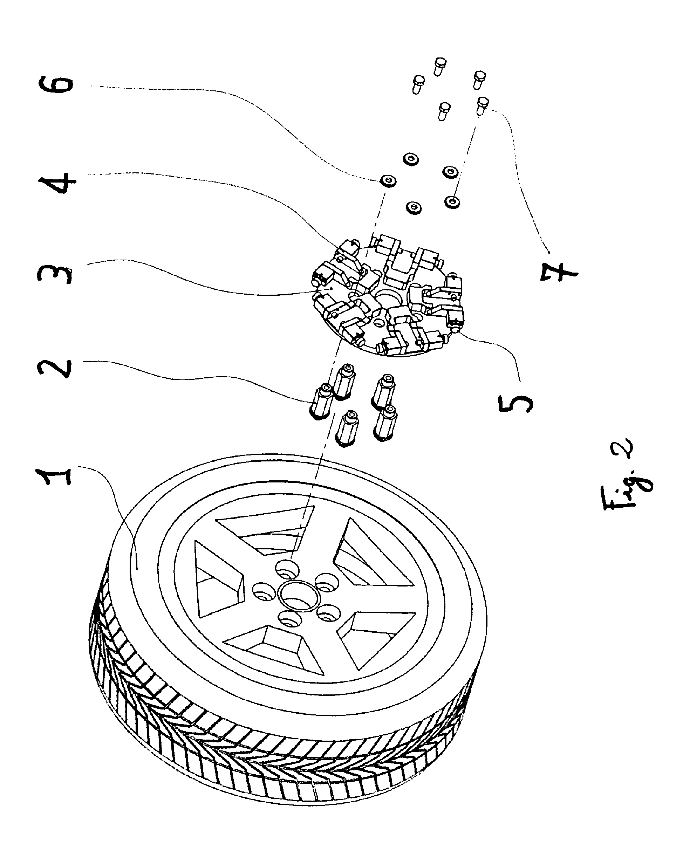

Figure 2 shows the fixing mechanism of the support 3 to the wheel according to a preferred embodiment of the present invention. According to this embodiment, the support 3 is fixed to the wheel by means of the bolts 2 employed to fix the wheel to the vehicle. The bolts 2 are provided with a first threaded portion in the region facing the vehicle adapted to fix said bolts to the vehicle and with a second threaded portion in the opposite region, the region facing outward from the vehicle when the bolts are mounted. This second threaded portion is employed to fix the support 3 of the anti-skid device to the wheel. The wheel is fixed to the vehicle by means of the bolts 2. The support 3 is provided with holes located in positions corresponding to the positions of the bolts. The support 3 is accordingly mounted in correspondence of the bolts and the system is fixed by means of fastening means such as washers 6 and screws 7. The screws 7 are adapted to be engaged to the second threaded portion of the bolts 2. In alternative embodiments of the present invention, the support 3 may be adapted to be engaged with the rim and/or with the hub of the wheel.

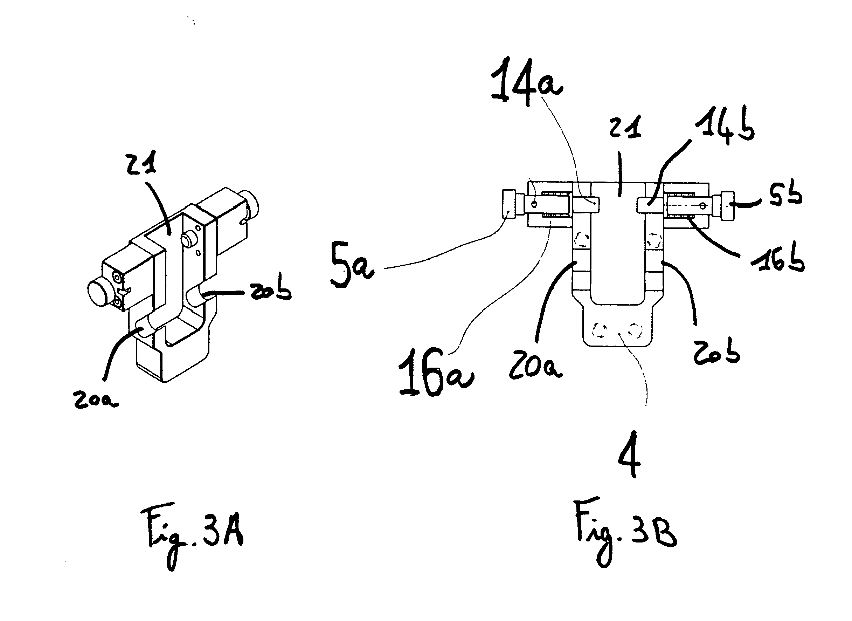

As can be seen in figure 2, the support 3 is provided with a plurality of blocks 4 adapted to hold the anti-skid units. The blocks are fixed to the support 3 by means of fastening means such as screws. The blocks 4 are shown in detail in figures 3A and 3B.

The block 4 comprises a cavity 21 for housing the claw support. The cavity is provided with left and right recesses 20a and 20b. Furthermore, the block 4 further comprises left and right holding means. The left holding means comprise a left retractable pin 14a mounted on a left spring 16a and actuated by a left knob 5a. Similarly, the right holding means comprise a right retractable pin 14b mounted on a right spring 16b and actuated by a right knob 5b.

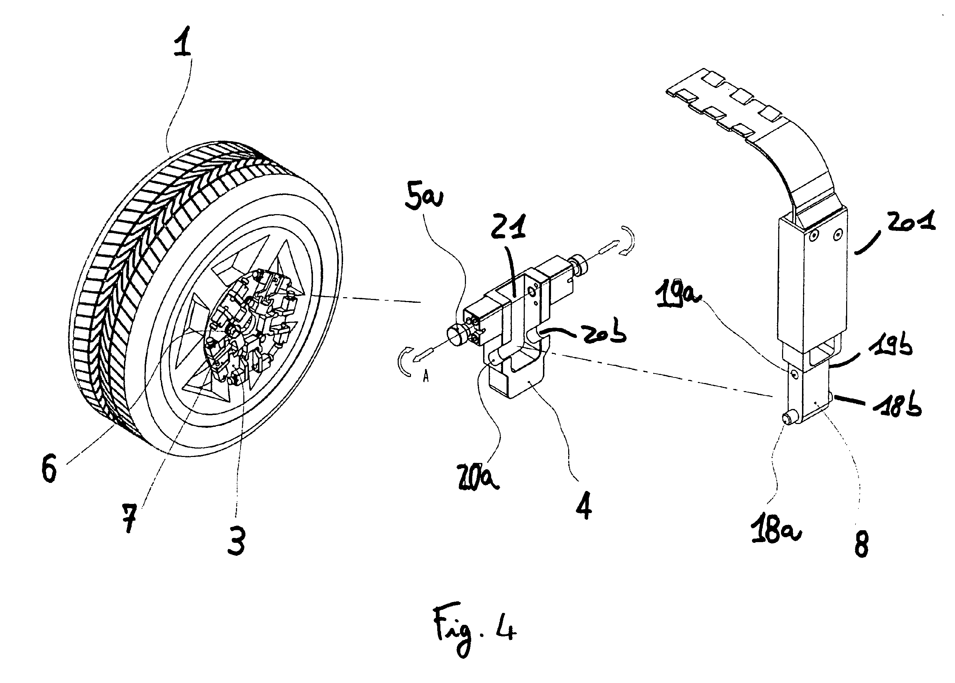

The block 4 is adapted to hold the anti-skid unit 201 as shown in figure 4. The anti-skid unit 201 comprises a body 8 adapted to be housed in the cavity 21 of the block 4. The body 8 is provided with left and right pins 18a and 18b adapted to be housed in the left and right recesses 20a and 20b, respectively, of the block 4. Moreover, the body 8 further comprises lateral left hole 19a and lateral right hole 19b for engaging the left retractable pin 14a and the right retractable pin 14b, respectively, of the block 4. Accordingly, the anti-skid unit 201 can be easily inserted and fixed to the block 4. For this purpose, the retractable pins 14a and 14b are retracted, the body 8 of the anti-skid unit is inserted into the cavity 21 so that the pins 18a and 18b are inserted into the recesses 20a and 20b. The retractable pins 14a and 14b are finally released so as to engage the holes 19a and 19b of the body 8 of the anti-skid unit. The springs 16a and 16b ensures the holding of the anti-skid unit 201 by the block 4. Moreover, in alternative embodiments of the present invention, the pins 14a and 14b may be provided with fastening means for preventing the pins from accidentally retract and release the anti-skid unit 201 from its holding position within the block 4.

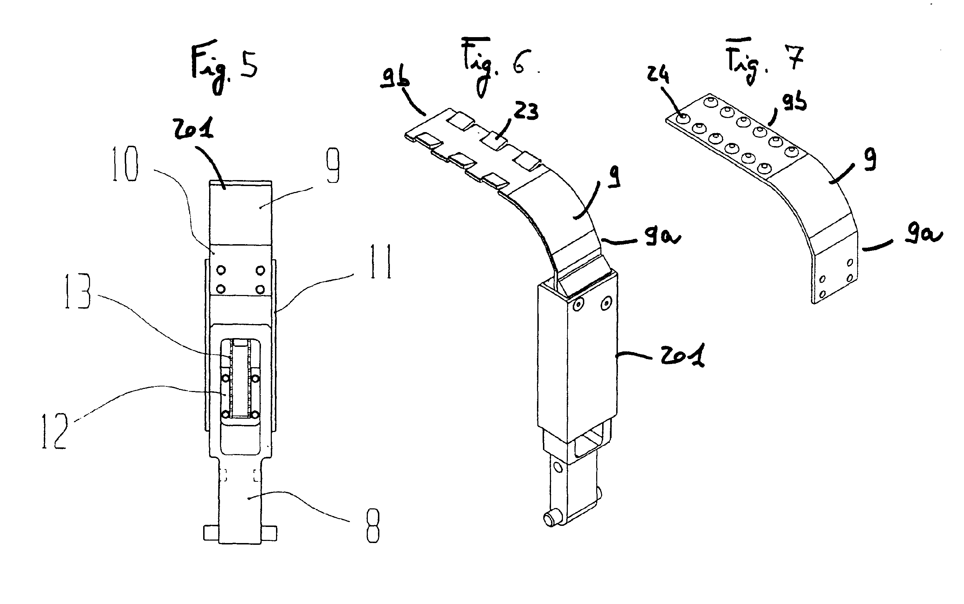

The structure of the anti-skid unit 201 is further shown in figures 5 and 6. The anti-skid unit 201 is adapted to hold the claw 9. The anti-skid unit 201 comprises a guide 11 for holding the claw 9.

The anti-skid unit 201 is further provided with sliding means 13 for allowing the guide 11 to slide along the height of the anti-skid unit 201 so as to adjust the position of the claw 9. The system is further provided with holding means 12 for holding the guide 11 in predetermined positions along the height of the anti-skid unit so as to safely keep the claw 9 in place.

The claw 9 is provided with fastening means 10 for fastening the claw 9 to the guides 11. Since the position of the claw 9 can be adjusted by means of the guide 11, the anti-skid unit 201 is adapted to be mounted on several kinds of wheels. In particular, the anti-skid unit is adapted to be mounted on wheels having different diameters.

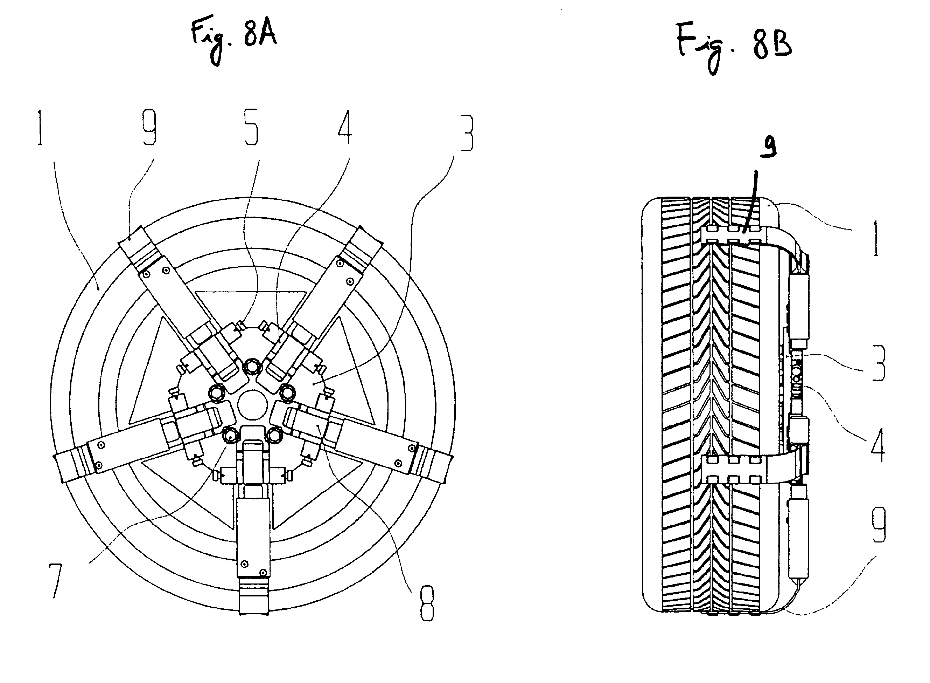

The claw 9 is structured so as to clasp the tire tread of the wheel as can be seen, for instance, in figure 8B. In particular, the claw 9 has substantially a L-shape (see figures 6 and 7) wherein the short arm 9a of the L is adapted to be engaged with the guides 11 of the anti-skid unit and the long arm 9b of the L is adapted to adhere on the tire tread of the wheel.

The surface of the claw 9 facing the road surface is provided with gripping means. In particular, the surface of the claw 9 facing the road surface is structured so as to exert friction on slippery road surfaces. This can be achieved in several ways. For instance, as can be seen in figure 6, the surface of the claw is provided with raised tabs 23. Alternatively, as can be seen in figure 7, the surface of the claw is provided with protrusions 24. The size, shape and number of the protrusions 24 can vary. The protrusions could be rounded or pointed, they could have, for instance, conical shape or tronco-conical shape or any other shape adapted to ensure the friction on the slippery road surface.

Figures 8A and 8B display a device according to a preferred embodiment of the present invention mounted on a wheel of a vehicle. Five identical anti-skid units as those described above are mounted on the wheel. Each of the unit is removable from the device independently from the other units.

Accordingly, it is extremely easy to replace one of the units in case it is defect or worn and it is not necessary to replace the entire device.

The anti-skid device according to the present invention is suitable, to be installed on several kinds of wheels and, accordingly, on several kinds of vehicles. It can be installed, for instance, on wheels for cars or trucks.

## Claims

1. Anti-skid device for a wheeled vehicle, comprising:
a support (3) adapted to be engaged with the wheel of a vehicle;
a plurality of independent anti-skid units (201, 202, 203, 204, 205), said anti-skid units comprising gripping means (9) adapted to exert friction on a slippery road surface, said anti-skid units (201, 202, 203, 204, 205) being adapted to be removably engaged with said support (3).

2. Anti-skid device according to claim 1, wherein said support (3) is adapted to be engaged to the wheel of the vehicle by means of the bolts (2) employed for engaging the wheel to the vehicle.

3. Anti-skid device according to one of claims 1 or 2, wherein said support (3) further comprises a plurality of blocks (4), wherein each block (4) is adapted to removably hold one of said anti-skid units (201, 202, 203, 204, 205).

4. Anti-skid device according to claim 3, wherein each of said blocks (4) comprises a cavity (21), a left recess (20a) and a right recess (20b) and wherein each of said anti-skid units comprises a body (8) adapted to be housed in said cavity (21), said body (8) comprising a left pin (18a) adapted to be housed in said left recess (20a) and a right pin (18b) adapted to be housed in said right recess (20b).

5. Anti-skid device according to claim 4, wherein each of said blocks (4) further comprises a left retractable pin (14a) and a right retractable pin (14b) and wherein said body (8) further comprises a left hole (19a) for housing said left retractable pin (14a) and a right hole (19b) for housing said right retractable pin (14b)

6. Anti-skid device according to claim 5, wherein said left retractable pin (14a) is adapted to be actuated by a left knob (5a) and said right retractable pin (14b) is adapted to be actuated by a right knob (5b) and wherein said left and right retractable pins (14a and 14b) are further provided with fastening means for preventing the pins from being accidentally actuated.

7. Anti-skid device according to one of claims 1 to 6, wherein each of said anti-skid units (201, 202, 203, 204, 205) is adapted to hold a claw 9, said claw being adapted to clasp the tire tread of the wheel.

8. Anti-skid device according to claim 7, wherein the surface of the claw 9 facing the road surface is adapted to exert friction on slippery road surfaces.

9. Anti-skid device according to one of claims 7 or 8, wherein each of said anti-skids units (201, 202, 203, 204, 205) comprises a guide (11) for holding said claw (9).

10. Anti-skid device according to claim 9, wherein each of said anti-skids units (201, 202, 203, 204, 205) is further provided with sliding means (13) for allowing the guide (11) to slide along the height of said anti-skid units so as to adjust the position of said claw (9).

11. Anti-skid device according to claim 10, wherein each of said anti-skids units (201, 202, 203, 204, 205) is further provided with holding means (12) for holding the guide (11) in predetermined positions along the height of said anti-skid units (201, 202, 203, 204, 205).
